# EUROPEAN PATENT APPLICATION

(11) **EP 4 489 194 A2**
(43) Date of publication of application: **08.01.2025**
(21) Application number: 24175791.3
(22) Date of filing: 14.05.2024
(51) Int. Cl.: H01M 50/209, H01M 50/507

(54) **BATTERY PACK**

(30) Priority: 04.07.2023 JP 2023110145
(71) Applicant: Prime Planet Energy & Solutions, Inc., Chuo-ku Tokyo 103-0022 (JP)
(72) Inventor: INAMURA, Takashi, Tokyo, 103-0022 (JP)
(74) Representative: Kuhnen & Wacker Patent- und Rechtsanwaltsbüro PartG mbB

(57) **Abstract**

A plate member (310) has a wall portion (314) defining a space for installing each of a plurality of bus bars (320) adjacent to each other in a stacking direction (first direction) of battery cells (100), the wall portion (314) has a first portion (314A) and a second portion (314B) each extending in a second direction orthogonal to the first direction, and a third portion (314C) that connects the first portion (314A) and the second portion (314B), the first portion (314A) and the second portion (314B) are located at positions separated from each other in the first direction, the third portion (314C) extends in the first direction, and the wall portion (314) further includes ribs (315) that protrude from the wall portion (314) to both sides in the first direction and that position, in the first direction, the plurality of bus bars (320) adjacent to each other.

## Description

### CROSS REFERENCE TO RELATED APPLICATIONS

This nonprovisional application is based on Japanese Patent Application No. 2023-110145 filed on July 4, 2023 with the Japan Patent Office, the entire contents of which are hereby incorporated by reference.

### BACKGROUND OF THE INVENTION

### Field of the Invention

The present technology relates to a battery pack.

### Description of the Background Art

The specification of Chinese Patent Laying-Open No. 115189104 discloses a battery connection module (bus bar module) in which a plurality of bus bars are accommodated in a carrier plate.

### SUMMARY OF THE INVENTION

When connecting an electrode terminal of a battery cell and a bus bar, the battery cell and the bus bar are preferably positioned relative to each other precisely. Therefore, in a bus bar module, a bus bar accommodated in a plate member is preferably positioned precisely.

An object of the present technology is to provide a battery pack in which a bus bar can be precisely positioned in a bus bar module.

The present technology provides the following battery pack.
[1] A battery pack comprising: a stack including a plurality of battery cells arranged side by side in a first direction; a case that accommodates the stack; and a bus bar module disposed on the stack, the bus bar module including a bus bar that electrically connects the plurality of battery cells and a plate member that accommodates the bus bar, wherein the plate member has a wall portion defining a space for installing each of a plurality of the bus bars adjacent to each other in the first direction, the wall portion has a first portion and a second portion each extending in a second direction orthogonal to the first direction, and a third portion that connects the first portion and the second portion, the first portion and the second portion are located at positions separated from each other in the first direction, and the third portion extends in the first direction, and the wall portion further includes ribs that protrude from the wall portion to both sides in the first direction and that position, in the first direction, the plurality of the bus bars adjacent to each other.
[2] The battery pack according to [1], wherein each of the ribs is located at a position adjacent to the third portion.
[3] The battery pack according to [1] or [2], wherein the wall portion further includes a mechanism that locks each of the bus bars in a third direction orthogonal to the first direction and the second direction.
[4] The battery pack according to any one of [1] to [3], wherein each of the bus bars includes a root portion extending in the first direction, and a first connection portion and a second connection portion each protruding from the root portion in the second direction and each electrically connected to the plurality of battery cells, and the ribs are located at positions at which the ribs are in abutment with both sides of the root portion in the first direction, the first connection portion, and the second connection portion.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an exploded perspective view of a battery pack.
Fig. 2 is a perspective view of a battery cell.
Fig. 3 is a top view of a plate member of a bus bar module.
Fig. 4 is a perspective view showing a structure around a bus bar.
Fig. 5 is a diagram showing a positioning mechanism of the bus bar module in the Y axis direction.
Fig. 6 is a perspective view showing a structure between the bus bar module and an upper surface of the battery cell.
Fig. 7 is a perspective view showing a rear surface of the plate member of the bus bar module.
Fig. 8 is a diagram showing the positioning mechanism of the bus bar module in the X axis direction.
Fig. 9 is a diagram showing a state of the structure shown in Fig. 4 when viewed from above.
Fig. 10 is a cross sectional view along X-X in Fig. 9.
Fig. 11 is a cross sectional view along XI-XI in Fig. 9.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium-ion battery. In the present specification, the "battery pack" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

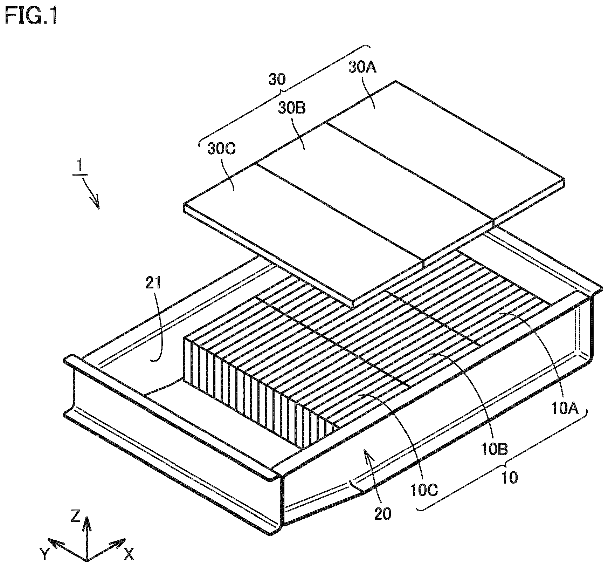

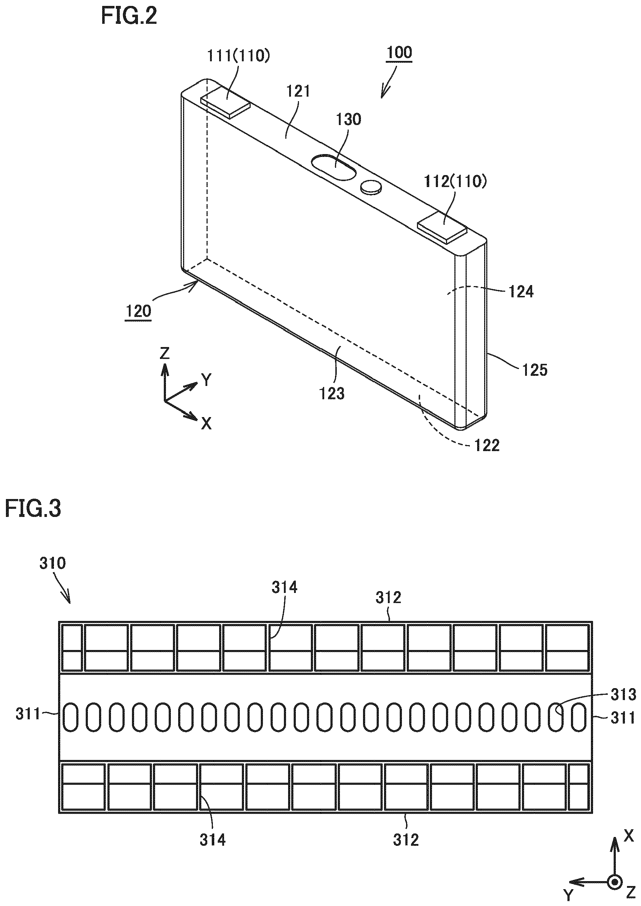

Fig. 1 is an exploded perspective view of a battery pack 1. As shown in Fig. 1, battery pack 1 includes: stacks 10 each including a plurality of battery cells 100 (see Fig. 2) arranged side by side in the Y axis direction (first direction); a case 20 that accommodates stacks 10; and bus bar modules 30 disposed on stacks 10.

Stacks 10 include a stack 10A (first stack), a stack 10B (second stack), and a stack 10C (third stack). Stacks 10A, 10B are adjacent to each other in the X axis direction (second direction). Stacks 10B, 10C are adjacent to each other in the X axis direction.

Case 20 has side walls 21 facing stacks 10A, 10B, 10C in the Y axis direction. Side walls 21 directly support stacks 10A, 10B, 10C from both sides in the Y axis direction. Thus, battery pack 1 according to the present embodiment employs a Cell-to-Pack structure in which stacks 10 each including the plurality of battery cells 100 are directly stored in the case.

Bus bar modules 30 include: a bus bar module 30A (first bus bar module) disposed on stack 10A; a bus bar module 30B (second bus bar module) disposed on stack 10B; and a bus bar module 30C (third bus bar module) disposed on stack 10C.

Fig. 2 is a perspective view showing a configuration of a battery cell 100 included in each of stacks 10A, 10B, 10C. As shown in Fig. 2, battery cell 100 has a prismatic shape. Battery cell 100 has electrode terminals 110, a housing 120, and a gas-discharge valve 130.

Electrode terminals 110 are formed on housing 120. Electrode terminals 110 have a positive electrode terminal 111 and a negative electrode terminal 112 as two electrode terminals 110 arranged side by side along the X axis direction (second direction) orthogonal to the Y axis direction (first direction). Positive electrode terminal 111 and negative electrode terminal 112 are provided to be separated from each other in the X axis direction.

Housing 120 has a substantially rectangular parallelepiped shape. An electrode assembly (not shown) and an electrolyte solution (not shown) are accommodated in housing 120. Housing 120 includes an upper surface 121, a lower surface 122, a first side surface 123, a second side surface 124, and a third side surface 125.

Upper surface 121 is a flat surface orthogonal to the Z axis direction. Electrode terminals 110 are disposed on upper surface 121. Lower surface 122 faces upper surface 121 along the Z axis direction (third direction) orthogonal to the Y axis direction (first direction) and the X axis direction (second direction).

Each of first side surface 123 and second side surface 124 is constituted of a flat surface orthogonal to the Y axis direction. Each of first side surface 123 and second side surface 124 has the largest area among the areas of the plurality of side surfaces of housing 120. Each of first side surface 123 and second side surface 124 has a rectangular shape when viewed in the Y axis direction. Each of first side surface 123 and second side surface 124 has a rectangular shape in which the X axis direction corresponds to the long-side direction and the Z axis direction corresponds to the short-side direction when viewed in the Y axis direction.

The plurality of battery cells 100 are stacked such that first side surfaces 123 of battery cells 100, 100 adjacent to each other in the Y direction face each other and second side surfaces 124 of battery cells 100, 100 adjacent to each other in the Y axis direction face each other. Thus, positive electrode terminals 111 and negative electrode terminals 112 are alternately arranged in the Y axis direction in which the plurality of battery cells 100 are stacked.

Gas-discharge valve 130 is provided in upper surface 121. When internal pressure of housing 120 becomes more than or equal to a predetermined value due to gas generated inside housing 120, gas-discharge valve 130 is opened to discharge the gas to the outside of housing 120.

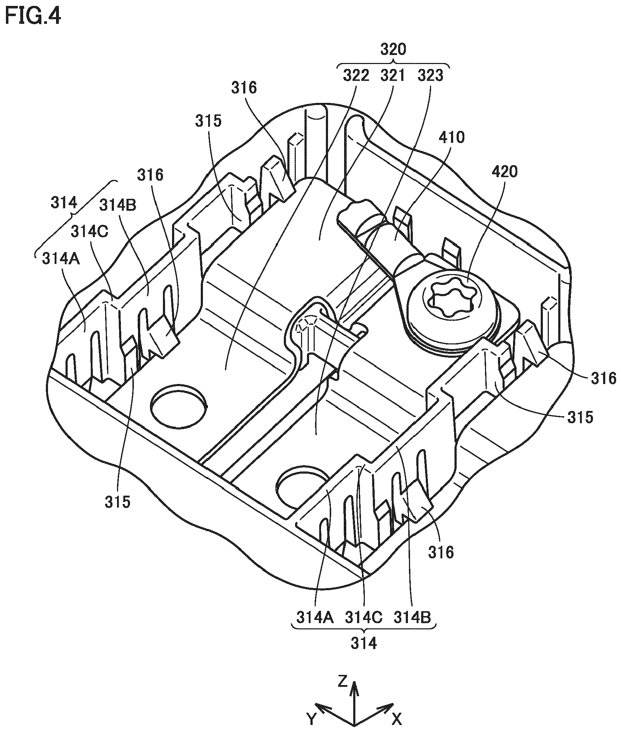

Next, a basic configuration of each bus bar module 30 will be described with reference to Figs. 3 and 4. Fig. 3 is a top view of a plate member 310 included in bus bar module 30. Fig. 4 is a perspective view showing a structure around a bus bar 320 in bus bar module 30.

Each of bus bar modules 30A, 30B, 30C includes plate member 310 shown in Fig. 3. As shown in Fig. 3, plate member 310 includes: end surfaces 311 located at end portions in the Y axis direction; end surfaces 312 located at end portions in the X axis direction; through holes 313 formed at positions corresponding to gas-discharge valves 130 of battery cells 100; and wall portions 314 that partition a space on plate member 310 into a plurality of spaces.

As shown in Fig. 4, bus bar 320 is accommodated in each space partitioned by wall portion 314. Bus bar 320 is composed of a conductor (typically, a metal member). Bus bar 320 electrically connects electrode terminals 110 of the plurality of battery cells 100 to each other. Bus bar 320 includes: a root portion 321 extending in the Y axis direction; and a connection portion 322 (first connection portion) and a connection portion 323 (second connection portion) each protruding from root portion 321 in the X axis direction. Connection portions 322, 323 are each connected to electrode terminals 110 of two adjacent battery cells 100 in the Y axis direction.

Wall portion 314 of plate member 310 includes a first portion 314A, a second portion 314B, and a third portion 314C. First portion 314A and second portion 314B are formed to extend in the X axis direction. First portion 314A and second portion 314B are located at positions separated from each other in the Y axis direction. Third portion 314C connects first portion 314A and second portion 314B.

Ribs 315 and locks 316 are formed in wall portion 314. Ribs 315 protrude from positions adjacent to third portion 314C of wall portion 314 to both sides in the Y axis direction. Ribs 315 position the plurality of adjacent bus bars 320 in the Y axis direction. Locks 316 lock bus bars 320 in the Z axis direction. The shapes and arrangements of ribs 315 and locks 316 are not limited to those shown in Fig. 4, and can be appropriately changed.

Bus bar 320 is connected to a wiring 410. Wiring 410 is fixed to bus bar 320 by a screw 420. The implementations of wiring 410 and screw 420 are not limited to those shown in Fig. 4, and the wiring may be constituted of, for example, a flexible wiring board.

Electrode terminal 110 of battery cell 100 and bus bar 320 are positioned relative to each other in the X axis direction and the Y axis direction and are then welded and joined to each other. By precisely performing this positioning, the step of welding electrode terminal 110 and bus bar 320 can be performed in a highly efficient and high-quality manner. Hence, when storing bus bar 320 in the space partitioned by wall portion 314, bus bar 320 is preferably positioned precisely with respect to plate member 310. Further, plate member 310 and stack 10 are also preferably positioned precisely.

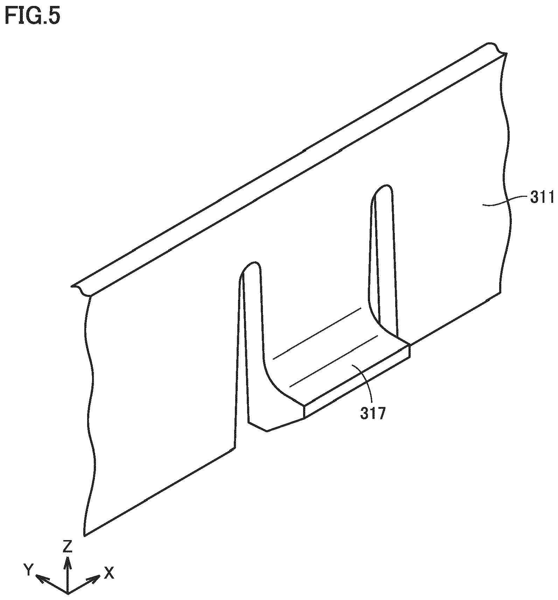

A positioning mechanism of bus bar module 30 (plate member 310) according to the present embodiment will be described with reference to Figs. 5 to 8.

Fig. 5 is a diagram showing the positioning mechanism of bus bar module 30 in the Y axis direction. As shown in Fig. 5, plate member 310 of bus bar module 30 has a positioning mechanism 317 that positions bus bar module 30 in the Y axis direction by biasing side wall 21 of case 20.

Positioning mechanism 317 shown in Fig. 5 is constituted of a protuberance having a snap-fit shape and formed at end surface 311 of plate member 310. The protuberance constituting positioning mechanism 317 protrudes from end surface 311 of plate member 310 to the side wall 21 side. When installing plate member 310 in case 20, positioning mechanism 317 presses side wall 21 of case 20 to bias plate member 310 toward a predetermined position. As a result, bus bar module 30 is positioned in the Y axis direction.

Positioning mechanism 317 may be provided at each of end surfaces 311 of plate member 310 on the both sides in the Y axis direction, or may be provided only at end surface 311 of plate member 310 on one side in the Y axis direction. When positioning mechanisms 317 are provided on the both sides in the Y axis direction, plate member 310 is biased toward the center of case 20 in the Y axis direction, and is positioned at a position at which biasing forces by positioning mechanisms 317 on the both sides are balanced. When positioning mechanism 317 is provided on one side in the Y axis direction, plate member 310 is biased toward side wall 21 opposite to the side on which positioning mechanism 317 is provided, and is positioned with side wall 21 serving as a reference plane.

The protuberance constituting positioning mechanism 317 is deformed toward the central side of stack 10 as a reaction to the pressing of side wall 21 of case 20. On this occasion, positioning mechanism 317 is preferably located at a position so as not to interfere with gas-discharge valve 130 when viewed in the Z axis direction. In this way, bus bar module 30 can be positioned in the Y axis direction without affecting discharging of the gas from gas-discharge valve 130 of battery cell 100 located at the end portion in the Y axis direction.

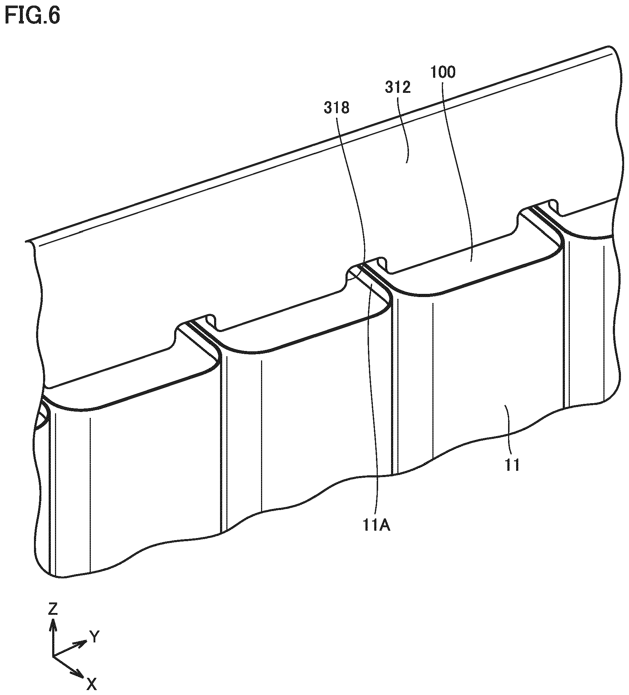

Fig. 6 is a perspective view showing a structure between bus bar module 30 and upper surface 121 of battery cell 100.

As shown in Fig. 6, stack 10 includes a separator 11 provided between the plurality of battery cells 100. Separator 11 may be a film or tape that covers first side surface 123, second side surface 124, and third side surface 125 of battery cell 100. Separator 11 may be a film that wraps around housing 120. Separator 11 may be a plate-shaped member (plate) interposed between battery cells 100 adjacent to each other. Separator 11 can be also formed by combining the film or tape with the plate-shaped member. Separator 11 has a protrusion 11A that protrudes to the plate member 310 side with respect to the plurality of battery cells 100. Plate member 310 is provided with a recess 318 that avoids protrusion 11A of separator 11.

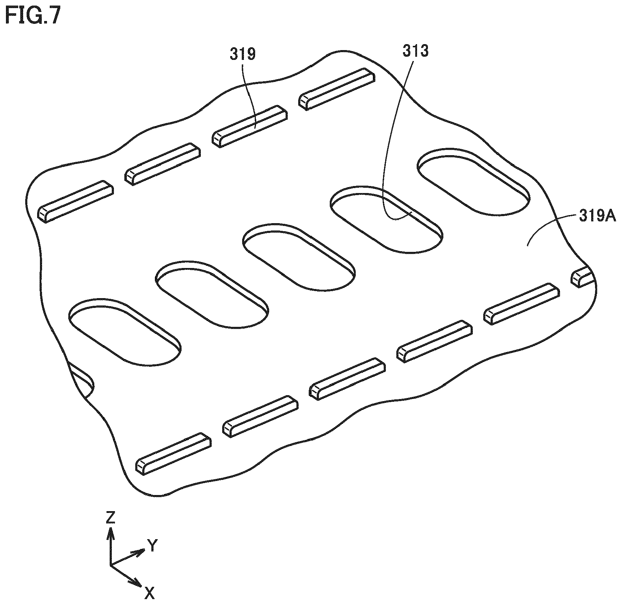

Fig. 7 is a perspective view showing the rear surface of plate member 310. As shown in Fig. 7, plate member 310 has a bottom surface 319A. Bottom surface 319A faces the upper surface of each battery cell 100. Protruding ribs 319 each protruding from bottom surface 319A of plate member 310 toward upper surface 121 of battery cell 100 are provided on portions of bottom surface 319A of plate member 310. Protruding ribs 319 are in abutment with upper surfaces 121 of battery cells 100. In the example of Fig. 7, protruding ribs 319 are intermittently formed on both sides beside through holes 313 so as to extend in the Y axis direction.

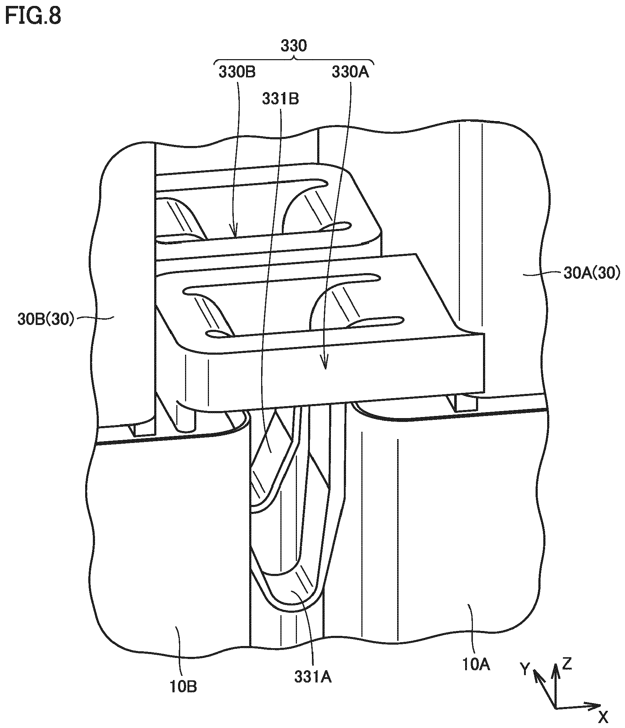

Fig. 8 is a diagram showing a positioning mechanism of bus bar module 30 in the X axis direction. As shown in Fig. 8, bus bar module 30 has a positioning mechanism 330 inserted between two adjacent stacks (stacks 10A, 10B in the example of Fig. 8) to position bus bar module 30 in the X axis direction. In the example of Fig. 8, bus bar module 30A has a positioning mechanism 330A and bus bar module 30B has a positioning mechanism 330B; however, the scope of the present technology is not limited to the configuration in which all the bus bar modules 30 have positioning mechanisms 330, and only part of the plurality of bus bar modules 30 may have positioning mechanism(s) 330.

Positioning mechanism 330A has an insertion portion 331A press-fitted between stacks 10A, 10B. When insertion portion 331A is press-fitted between stacks 10A, 10B, bus bar module 30A is biased in a direction away from stack 10B. On this occasion, insertion portion 331A is brought into abutment with the side surface of stack 10A, thereby positioning bus bar module 30A in the X axis direction.

Positioning mechanism 330B has an insertion portion 331B press-fitted between stacks 10A, 10B. When insertion portion 331B is press-fitted between stacks 10A, 10B, bus bar module 30B is biased in a direction away from stack 10A. On this occasion, insertion portion 331B is brought into abutment with the side surface of stack 10B, thereby positioning bus bar module 30B in the X axis direction.

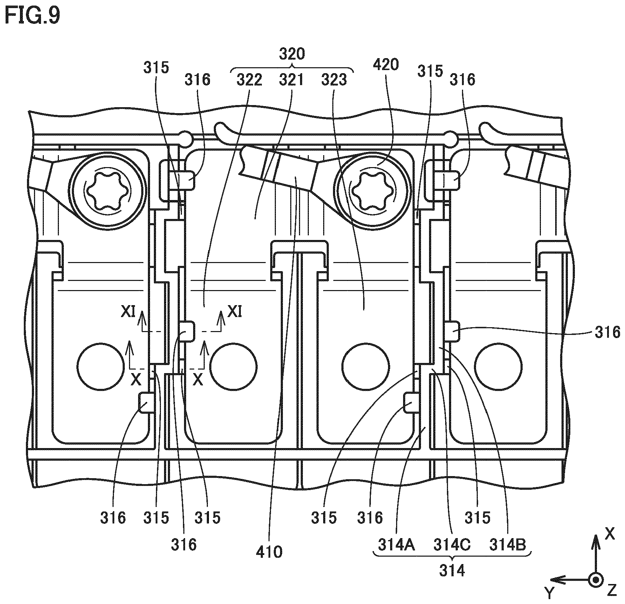

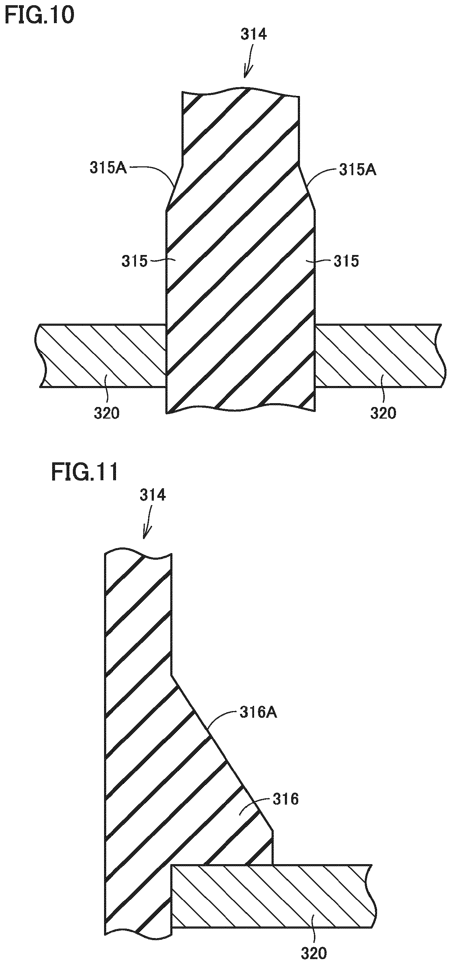

Next, the positioning of bus bar 320 with respect to plate member 310 will be described in detail with reference to Figs. 9 to 11. Fig. 9 is a diagram showing a state of the structure shown in Fig. 4 when viewed from above, and Figs. 10 and 11 are respective cross sectional views along X-X and XI-XI in Fig. 9.

In the example shown in Fig. 9, ribs 315 are provided at four locations and locks 316 are provided at three locations in the space defined by wall portion 314 and having a substantially rectangular shape.

More specifically, ribs 315 are provided at positions at which ribs 315 are in abutment with both sides (two locations) of root portion 321 of bus bar 320 and connection portions 322, 323 (one location for each). Locks 316 are provided at positions at which locks 316 are in abutment with one side (one location) of root portion 321 of bus bar 320 and connection portions 322, 323 (one location for each).

It should be noted that when a flexible board is provided instead of wiring 410 shown in Fig. 9, screw 420 can be omitted, with the result that a lock 316 can also be added in the vicinity of screw 420 to provide four locks 316 for one bus bar 320.

First portion 314A, second portion 314B, and third portion 314C of wall portion 314 form a crank shape. Ribs 315 are formed to protrude toward both sides in the Y axis direction from positions adjacent to third portion 314C forming the crank shape. Locks 316 are formed at positions separated from third portion 314C and ribs 315 in the X axis direction.

As shown in Fig. 10, rib 315 is brought into abutment with bus bar 320 from the lateral side (Y axis direction), thereby positioning bus bar 320 in the Y axis direction. When storing bus bar 320 in plate member 310, bus bar 320 is moved downward along an inclined surface 315A provided above rib 315. From the viewpoint of improving positioning precision of bus bar 320, a clearance (tolerance) between rib 315 and bus bar 320 is preferably as small as possible.

As shown in Fig. 11, lock 316 is brought into abutment with bus bar 320 from above (Z axis direction) so as to lock bus bar 320 in the Z axis direction. When storing bus bar 320 in plate member 310, bus bar 320 is moved downward along an inclined surface 316A provided above lock 316. On this occasion, wall portion 314 is deformed to be deflected, with the result that bus bar 320 can be pushed downward beyond the protrusion of lock 316.

When one wall portion is provided at a position corresponding to an intermediate position between first portion 314A and second portion 314B of wall portion 314 and rib 315 and lock 316 protrude from that position, an amount of protruding of each of rib 315 and lock 316 from wall portion 314 needs to be large, with the result that as compared with the structure shown in Figs. 9 to 11, it is necessary to increase the length of each of inclined surfaces 315A, 316A or to increase the inclination thereof with respect to the vertical direction (make the inclination of each of inclined surfaces 315A, 316A close to the horizontal direction). As a result, the step of pushing bus bar 320 downward toward battery cell 100 is less likely to be performed smoothly.

On the other hand, when a pair of wall portions are provided at positions corresponding to first portion 314A and second portion 314B of wall portion 314 and rib 315 and lock 316 protrude from those positions, rib 315 and lock 316 having the same shapes as those shown in Figs. 9 to 11 can be provided. However, a clearance having a narrow width needs to be provided between the pair of wall portions, and this makes it difficult to form plate member 310 by resin molding. Even if the resin molding can be performed, the pair of wall portions are formed at positions close to each other in the Y axis direction, with the result that when one wall portion is deflected in the vicinity of lock 316 in the step of pushing bus bar 320, the one wall portion may interfere with the other wall portion.

Further, when the pair of wall portions are integrated, a thick wall portion 314 is formed, with the result that flexibility of wall portion 314 (in the vicinity of lock 316) necessary when pushing bus bar 320 can be compromised. Further, reduction in weight and manufacturing cost of plate member 310 can be hindered.

In bus bar module 30 according to the present embodiment, wall portion 314 of plate member 310 has a crank shape, and ribs 315 protrude toward bus bars 320 from first portion 314A and second portion 314B close to bus bars 320 in the Y axis direction. Therefore, positioning precision of bus bar 320 can be improved with the clearance being made small between rib 315 and bus bar 320 in the Y axis direction without excessively increasing the thickness of wall portion 314 and while reducing the protruding height of rib 315.

Since battery pack 1 employs a Cell-to-Pack structure in which stacks 10 each including the plurality of battery cells 100 is directly accommodated in case 20, a member such as a binding bar in a module structure cannot be used as a member for positioning bus bar module 30.

In battery pack 1 according to the present embodiment, since positioning mechanism 317 provided in plate member 310 biases side wall 21 of case 20 so as to position bus bar module 30 in the Y axis direction, bus bar module 30 can be precisely positioned in battery pack 1 having the Cell-to-Pack structure without providing a complicated mechanism.

In battery pack 1, protruding ribs 319 protruding from bottom surface 319A of plate member 310 toward battery cells 100 are in abutment with upper surfaces 121 of battery cells 100. Thus, by bringing protruding ribs 319 into abutment with battery cells 100, a contact area between plate member 310 and each of upper surfaces 121 of battery cells 100 can be reduced to reduce frictional resistance when plate member 310 is moved with respect to battery cells 100, with the result that plate member 310 can be positioned smoothly and precisely.

It should be noted that the shapes and arrangements of protruding ribs 319 are not limited to those shown in Fig. 7. Further, in the present technology, each protruding rib 319 is not necessarily an essential configuration.

In battery pack 1, since plate member 310 is provided with recess 318 that avoids protrusion 11A of separator 11, movement of plate member 310 in the Y axis direction is not hindered by protrusion 11A of separator 11 when positioning plate member 310 in the Y axis direction using positioning mechanism 317. Therefore, plate member 310 can be positioned smoothly and precisely.

It should be noted that in the present technology, protrusion 11A of separator 11 and recess 318 of plate member 310 are not necessarily essential configurations.

Battery pack 1 is provided with positioning mechanism 330 that is inserted between stacks 10A, 10B and that positions bus bar modules 30A, 30B in the X axis direction. Therefore, plate member 310 can be positioned in the X axis direction as well as the Y axis direction.

It should be noted that in the present technology, positioning mechanism 330 for the positioning in the X axis direction is not necessarily an essential configuration. Further, all of the plurality of bus bar modules 30A, 30B, 30C may include positioning mechanisms 330, or part of the plurality of bus bar modules 30A, 30B, 30C may include positioning mechanism(s) 330.

According to the present technology, by providing the bus bar module with the rib for positioning the bus bar in the stacking direction (first direction) of the battery cells, it is possible to provide a battery pack in which a bus bar can be positioned in a bus bar module precisely. Here, since the wall portion has the crank shape including the first to third portions, the positioning precision of the bus bar can be improved while suppressing decreased workability when pushing the bus bar.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery pack (1) comprising:
a stack (10) including a plurality of battery cells (100) arranged side by side in a first direction;
a case (20) that accommodates the stack (10); and
a bus bar module (30, 30A, 30B, 30C) disposed on the stack (10), the bus bar module (30, 30A, 30B, 30C) including a bus bar (320) that electrically connects the plurality of battery cells (100) and a plate member (310) that accommodates the bus bar (320), wherein
the plate member (310) has a wall portion (314) defining a space for installing each of a plurality of the bus bars (320) adjacent to each other in the first direction,
the wall portion (314) has a first portion (314A) and a second portion (314B) each extending in a second direction orthogonal to the first direction, and a third portion (314C) that connects the first portion (314A) and the second portion (314B), the first portion (314A) and the second portion (314B) are located at positions separated from each other in the first direction, and the third portion (314C) extends in the first direction, and
the wall portion (314) further includes ribs (315) that protrude from the wall portion (314) to both sides in the first direction and that position, in the first direction, the plurality of the bus bars (320) adjacent to each other.

2. The battery pack (1) according to claim 1, wherein each of the ribs (315) is located at a position adjacent to the third portion (314C).

3. The battery pack (1) according to claim 1 or 2, wherein the wall portion (314) further includes a mechanism (316) that locks each of the bus bars (320) in a third direction orthogonal to the first direction and the second direction.

4. The battery pack (1) according to any one of claims 1 to 3, wherein
each of the bus bars (320) includes a root portion (321) extending in the first direction, and a first connection portion (322) and a second connection portion (323) each protruding from the root portion (321) in the second direction and each electrically connected to the plurality of battery cells (100), and
the ribs (315) are located at positions at which the ribs (315) are in abutment with both sides of the root portion (321) in the first direction, the first connection portion (322), and the second connection portion (323).
